Europäisches Patentamt

European Patent Office

Office européen des brevets

(19)

(11) Publication number: **0 178 074**
A1

(12)

# EUROPEAN PATENT APPLICATION

(21) Application number: 85306385.7

(22) Date of filing: 09.09.85

(51) Int. Cl.⁴: **A 23 L 1/04**, A 23 L 1/48

(30) Priority: 17.09.84 US 651296

(43) Date of publication of application: 16.04.86
Bulletin 86/16

(84) Designated Contracting States: **AT BE CH DE FR GB IT
LI LU NL SE**

(71) Applicant: **FRITO-LAY, INC., P.O. Box 35034, Dallas
Texas 75235 (US)**

(72) Inventor: **Odland, Barbara K., 2108 Lattice Court, Plano
Texas 75075 (US)**
Inventor: **Riley, Rebecca Lee, 2807 Bachman No. 208,
Dallas Texas 75235 (US)**
Inventor: **Reed, Richard B., 305 Oak Trail, Lewisville
Texas 75067 (US)**

(74) Representative: **Eyles, Christopher Thomas et al,
BATCHELLOR, KIRK & EYLES 2 Pear Tree Court
Farringdon Road, London, EC1R 0DS (GB)**

(54) Multi-textured food products.

(57) A shelf-stable, multi-textured food product is disclosed
which comprises a thermoplastic, low water activity binder
matrix comprising a gelled solution of gelatin in glycerol and a
plurality of discrete food-component regions, distributed within
the binder, which comprise foods having a variety of texture
and flavor characteristics. We have found that the product is
highly resistant to the migration of moisture between individual
food-component regions, thereby allowing the different food
components to maintain their texture and flavor individuality.

## MULTI-TEXTURED FOOD PRODUCTS

This invention relates to the production of multi-textured food products. More particularly, the invention relates to the production of food products which contain a plurality of different food components having a variety of texture and flavor characteristics, such as granola bars.

Studies of consumer preferences relating to snack foods have consistently shown a marked preference for food items which are characterized by textural variety. That is, consumers prefer snack foods which contain, within a single food item, a plurality of food components having differing textural characteristics, such as crunchy and chewy components. One manifestation of this preference is the recent popularity of so-called "granola bars". Granola bars are prepared by distributing a granola mixture, e.g., a mixture of seeds, nuts, puffed cereal, fruit pieces, etc., throughout a flavored binder matrix and forming the product into the desired shape.

In order for a multi-textured food product, such as a granola bar, to be acceptable to the consumer the individual food components in the product must retain their individual texture and flavor identities over reasonable shelf life so that the product will have the same internal texture and flavor variety at the time of consumption as it did at the time of production. Unfortunately, the individual food components tend to lose their texture, as well as flavor, identities as a result of the migration of moisture from food components of higher water content to those of lower water content.

The water activity ($A_w$) of the binder matrix determines the rate at which moisture can migrate from one food component to another through the matrix. Water activity, which is the ratio of the fugacity of water within the substance being studied (i.e., the binder matrix) to the fugacity of pure water, can be considered to be a measure of the tendency of a substance to allow water migration. Originally, granola bars were prepared using binder matrices having low water activity in order to allow the distributed food components to retain their textural individuality during storage. However, the low water activity binder matrix materials which were employed possessed unacceptable textures, generally imparting a hardness to the product which was inconsistent with the consumer's expectations of granola bar texture. More recently, granola bars with a soft, chewy binder matrix have been introduced. These granola bars are generally prepared using corn syrup or similar materials as a binder matrix. While these binder materials impart the desired soft, chewy texture to the product, they have somewhat higher water activities which allow a greater amount of moisture to migrate from one food component to another, thereby reducing the texture and flavor variety within the product. Moreover, the manner in which the soft granola bars of the prior art are prepared allows moisture to contact the dry food ingredients during the processing, causing an essentially irreversible change in texture of these ingredients. Until now, manufacturers of granola bars or similar multi-textured food products have been faced with the hobson's choice of using a soft, chewy binder material with unacceptably high water activity or using a low water activity binder which is unacceptably hard. Consequently, the products which have been available suffer either from unacceptable hardness or loss of internal texture and flavor variety during storage and shipping due to moisture contact with the dry food ingredients in the binder.

This invention provides a shelf-stable, multi-textured food product, such as a granola bar, which comprises:

(a) a thermoplastic, low water activity binder matrix comprising a gelled solution of gelatin in glycerol; and

(b) a plurality of discrete food-component regions distributed within the matrix, said discrete food-component regions having a variety of texture and flavor characteristics.

The binder material employed in the food product of the invention is soft and chewy, yet it has a low water activity which allows it to act as a barrier to the migration of moisture between the discrete food component regions. Consequently, the product maintains its internal texture and flavor variety during extended periods of shipping and storage. If desired, the binder may contain additional ingredients such as sweeteners and texture modifying agents.

Due to its excellent resistance to moisture migration, the multi-textured food product of the invention can be used in conjunction with low moisture food products such as crackers, cookies and baked doughs to prepare composite products in the form of laminates, sandwiches, filled products, etc., without the danger that moisture will migrate into the low moisture component and cause it to become soggy.

The shelf-stable, multi-textured food product of the invention comprises a thermoplastic, low water activity binder matrix having a plurality of discrete food-component regions distributed therein. The binder matrix is a gelled solution of gelatin in glycerol. Type A

4

gelatin, i.e., gelatin derived from acid-processed collagen usually obtained from porkskins, is preferred for use in the preparation of the binder matrix. The Bloom strength of the gelatin employed is preferably from about 150 grams to 225 grams. The gelatin can be dissolved in glycerol at temperatures above 60°C and forms a gel at temperatures below about 35°C. The amount of gelatin employed is generally from about 1% to 10%, based on the total weight of the binder matrix, preferably from about 2% to 5%, based on the total weight of the binder matrix.

The balance of the binder matrix comprises glycerol together with any additional ingredients which can be dissolved or distributed continuously and evenly throughout the binder matrix and which impart desirable flavor, texture or other characteristics to the binder. Preferably, from about 5% to 40% by weight of the binder is glycerol, most preferably from about 15% to 25%. Other ingredients which can be used in the binder matrix include, for example, sweeteners such as honey, high fructose corn syrup, maltodextrin and brown sugar; salt; flavorings such as vanilla, butterscotch and cinnamon; and texture modifiers such as fats or emulsifiers. These ingredients are used in amounts sufficient to achieve the desired characteristics in the final product.

Preferred sweeteners for use in the binder matrix are polyhydric alcohols such as sorbitol or mannitol, corn sweeteners and maltodextrins. Since gelatin is capable of forming a gel with the polyhydric alcohol sweeteners, they can be used in place of a portion of the glycerol. Sorbitol, for example, can be added to the binder matrix in an amount from about 0.05% to 5%, based on the total weight of the binder. Addition of sorbitol in these amounts, with concomitant reduction of the glycerol component to about 5% to 15% of the total weight of the binder matrix, is desirable, since sorbitol has a flavor which is generally more acceptable than that of glycerol.

If desired, fats can be incorporated as texture modifiers in amounts up to about 40% of the binder matrix. Fats are generally employed to provide smoothness, or "mouthfeel", to the product. If fats are added to the binder, then a small amount of a food grade emulsifier such as lecithin is also added to aid in the dispersion of the fats. The emulsifier will generally be present in an amount less than 1% of the total weight of the binder. Maltodextrin also acts as a texture modifying agent by increasing the body of the binder matrix.

Water may initially be present in the binder matrix solution in amounts up to about 25% as a processing aid, for example, to assist in dissolving maltodextrin. However, it is desirable that essentially all the water be removed from the binder prior to the production of the finished product. The percentages of various materials present in the binder, as set forth above, are based on the final binder weight, i.e., weight of the binder after removal of any water which may initially be present.

The precise amounts of individual ingredients incorporated into the binder will depend upon the desired properties, such as flavor and texture, in the final product. The water activity of the binder matrix should be below about 0.425, preferably below about 0.350.

The discrete food component regions are comprised of solid or semi-solid foods which cannot be dissolved or evenly dispersed within the binder, but rather, form discrete regions each having its own individual texture and flavor characteristics. As merely exemplary of food items which are suitable for use in the product of the invention, one can mention edible seeds such as sesame, sunflower or pumpkin seeds; nuts such as almonds, hazelnuts, walnuts or peanuts; cereals such as oats, barley or crisped rice; fruit pieces such as apples, bananas, apricots and the like, which may be dried or partially dried; comminuted puff-extruded farinaceous products such as puff-extruded corn meal; chocolate chips; peanut butter chips; and shredded coconut meat. Other food items suitable for use in the product of the invention will be readily apparent to those skilled in the art. Preferably, the food items are selected to maximize textural variety and produce a desirable flavor combination. If desired, one or more of the food items can be processed prior to incorporation into the binder, for example, by roasting, to improve texture and/or flavor. Advantageously, the discrete food component regions can be produced by admixing a granola mixture with the binder matrix.

The food items which make up the discrete food component regions are preferably provided to the product in an amount from about 30% to 70%, by total weight of the product and the binder matrix is provided in an amount from about 70% to 30%, by total weight of the product. The precise ratio of binder to food components depends upon the desired overall texture of the product. If one desires a product that is more crispy overall, then a higher ratio of food components to binder is used. Conversely, if one desires a product that is more chewy overall, then a higher ratio of binder to food components is used. We have found that a 60:40 ratio (food components:binder) provides a product which is highly acceptable as a granola bar type product.

The shelf-stable, multi-textured food product of the invention may be produced by heating glycerol, dissolving gelatin in the heated glycerol, dissolving or dispersing any desired flavor or texture modifying ingredients in the solution, admixing the solution with a plurality of

7

individual insoluble food components, said food components having a variety of textural characteristics, and cooling the solution to form a gelatinous binder. The other materials which may be incorporated into the binder, e.g., the previously mentioned sweeteners, texture.modifiers and flavoring ingredients, can be incorporated in to the binder in any convenient manner which allows them to be dissolved or evenly dispersed throughout the binder. In the case of the polyhydric alcohol sweeteners, such as sorbitol, which can be used as a solvent for the gelatin in place of a portion of the glycerol, these can be added to the glycerol prior to dissolution of the gelatin. In the case of fats, which are added to the binder to improve the mouthfeel of the product, it is preferred to add these, together with a small, effective amount of an emulsifier such as lecithin, prior to the addition of the insoluble food components and to disperse them in the binder with the aid of high shear mixing.

After the insoluble food components have been thoroughly admixed with the binder solution, the product can be cooled and molded into any desired shape. Advantageously, a product incorporating a granola mixture in the binder is produced in the shape of a bar having a generally rectangular cross-section. If desired, composite products can be prepared by laminating the multi-textured food product onto a cracker or prebaked dough product such as a cookie or by using it as a filling in a baked dough product.

The examples which follow are intended to be merely illustrative of the invention and not to limit its scope in any way.

The granola mixture which was employed in the examples was produced as follows:

0178074

8

Granola Mix

| Ingredient | Parts by Weight |
|---|---|
| Vream (fat) | 8.2 |
| Honey | 4.4 |
| Water | 1.4 |
| Vanilla | 0.6 |
| Salt | 0.6 |
| Butter Buds | 0.2 |
| Oats | 48.2 |
| Coconut | 8.7 |
| Sesame Seeds | 14.8 |
| Peanuts | 13.1 |

The Vream, honey, water, vanilla, salt and butter buds were combined, heated to melt the fat and mixed well. The oats, coconut, sesame seeds and peanuts were mixed and added to the heated mixture. The granola was dried in an oven at 325°F for about 45 minutes.

9

## Example I

A granola bar was prepared from the following
ingredients:

| Ingredient | Parts by Weight |
|---|---|
| Binder | |
| Glycerol | 9.1 |
| Honey | 4.0 |
| Water | 4.5 |
| Maltodextrin | 13.6 |
| Brown Sugar | 4.5 |
| Gelatin | 1.1 |
| Caramel Set | 0.2 |
| Salt | 0.3 |
| Vanilla | 0.7 |
| Butterscotch | 0.1 |
| Vream | 4.6 |
| Kaomel | 3.5 |
| Cinnamon Chips | 1.1 |
| | |
| Granola Ingredients | |
| Granola Mix | 43.5 |
| Crisped Rice | 9.2 |

In a jacketed kettle set at 75°C, the glycerol was
combined with the honey and water. The maltodextrin,
brown sugar, gelatin, caramel set and salt were blended
together and added to the kettle contents. The kettle
contents were mixed at low speed for 45 minutes while the
temperature was maintained at 75°C. The vanilla and
butterscotch were well mixed into the kettle contents.
The Vream, kaomel and cinnamon chips were then added with
mixing. The granola and crisped rice were blended
together and added to the binder matrix from the kettle.

10

The mixture was thoroughly blended and poured into pans. After setting, the product was cut into bars.

## Example II

A composite product comprising a granola bar top laminated to a cookie base was prepared from the following ingredients:

| Ingredients | Parts by Weight |
| --- | --- |
| Cookie Ingredients | |
| Vream | 4.2 |
| Brown Sugar | 5.5 |
| Sugar | 2.3 |
| Egg | 1.4 |
| Water | 2.8 |
| Oats | 6.2 |
| Flour | 2.3 |
| Salt | 0.1 |
| Baking Soda | 0.1 |
| | |
| Binder | |
| Glycerol | 5.0 |
| Honey | 2.2 |
| Water | 5.6 |
| Maltodextrin | 7.5 |
| Brown Sugar | 1.6 |
| Gelatin | 0.6 |
| Vream | 6.3 |
| Cinnamon Chips | 1.4 |
| | |
| Granola Ingredients | |
| Granola Mix | 23.3 |
| Crisped Rice | 8.8 |
| Toasted Almonds | 6.8 |

The Vream and sugars of the cookie ingredients were creamed together. The remaining cookie ingredients were added and the mixture was blended. The blended ingredients were rolled onto a baking tray to a thickness of about 1/8 inch, baked 20 minutes at 350°F and cooled.

In a jacketed kettle set at 75°C, the glycerol, honey and water were combined. The maltodextrin, brown sugar and gelatin were blended together, added to the contents of the kettle and blended well. The kettle contents were mixed at low speed for 45 minutes, maintaining the temperature at 75°C throughout. The Vream and cinnamon chips were added slowly and blended well. The granola, crisped rice and almonds were blended together. One-third of the binder material was separated and spread onto the cookie as a nougat. The remainder of the binder was blended with the granola ingredients and applied to the surface of the nougat-covered cookie. The product was allowed to set and was then cut into bars.

## Example III

A composite product comprising a granola bar top laminated to a cookie base was prepared from the following ingredients:

| Ingredients | Parts by Weight |
| --- | --- |
| Cookie Ingredients | |
| Butter | 10.5 |
| Sugar | 7.2 |
| Flour | 7.6 |
| Sesame Seeds | 3.4 |
| Coconut | 4.7 |
| Almonds | 1.6 |

Binder

| | |
|---|---|
| Glycerol | 4.2 |
| Honey | 1.8 |
| Water | 4.6 |
| Maltodextrin | 6.3 |
| Brown Sugar | 1.4 |
| Gelatin | 0.5 |
| Vream | 5.2 |
| Cinnamon Chips | 1.0 |

Granola Mixture

| | |
|---|---|
| Granola Mix | 26.0 |
| Crisped Rice | 7.8 |
| Toasted Almonds | 6.2 |

The butter and sugar of the cookie ingredients were creamed together. The flour was added and thoroughly blended. The sesame seeds, coconut and almonds were added and blended. The mixture was rolled onto a baking tray to a thickness of about 1/8 inch, baked in an oven at 325°F and cooled.

In a jacketed kettle set at 75°C, the glycerol, honey and water were combined. The maltodextrin, brown sugar and gelatin were blended together, addded to the kettle contents and blended well. The kettle contents were mixed at low speed for 45 minutes, maintaining the temperature at 75°C throughout. The Vream and cinnamon chips were slowly added and blended into the kettle contents. The granola mix, crisped rice and toasted almonds were blended together. One-third of the binder material was separated and spread onto the cookie as a nougat. The remainder of the binder was blended with the granola ingredients and applied to the surface of the nougat-covered cookie. The product was allowed to set and was then cut into bars.

13

## Example IV

A granola bar, which employs sorbitol as a sweetener and gelatin solvent and which incorporates fat to improve the mouthfeel of the product, is prepared from the following ingredients:

| Ingredient | Parts by Weight |
|---|---|
| Binder | |
| Sorbitol | 0.5 |
| Glycerol | 5.0 |
| Honey | 5.0 |
| Water | 5.0 |
| Maltodextrin | 14.0 |
| Brown Sugar | 5.0 |
| Gelatin | 1.0 |
| Lecithin | 0.3 |
| Salt | 0.3 |
| Flavors | 1.0 |
| Fat | 10.0 |
| | |
| Granola Ingredients | |
| Granola Mix | 42.9 |
| Collets* | 10.0 |

* Collets are pieces of comminuted puff extrusion produced by extruding a mixture of rice meal, wheat bran, caramel color, annato and malt syrup with water under high pressure (1,000 psi).

In a jacketed kettle set at 75°C, the glycerol, sorbitol, honey and water are combined. The maltodextrin, brown sugar, gelatin, caramel set and salt are blended and added to the kettle contents. The kettle contents are mixed at low speed for 45 minutes, maintaining the temperature at 75°C. The flavors are added and mixed. The fat is then slowly added to the kettle contents, mixing well. The granola mix and collets are combined and blended with the kettle contents. The mixture is placed in pans and allowed to set and is then cut into bars.

CLAIMS

1.      A shelf-stable, multi-textured food product comprising:

(a) a thermoplastic, low water activity binder matrix comprising a gelled solution of gelatin in glycerol; and

(b) a plurality of discrete food-component regions distributed within the binder matrix, said discrete food-component regions having a variety of texture and flavor characteristics.

2.      A shelf-stable, multi-textured food product as claimed in claim 1, wherein the binder matrix further comprises one or more flavor modifying ingredients.

3.      A shelf-stable, mutli-textured food product as claimed in claim 2, wherein the flavor modifying ingredients include sweeteners.

4.      A shelf-stable, multi-textured food product as claimed in claim 3, wherein sorbitol is present as a sweetener in an amount from about 0.05% to 5%, based on the total weight of the binder matrix, and the amount of glycerol present is from 5% to 15% based on the total weight of the binder matrix.

5.      A shelf-stable, multi-textured food product as claimed in any one of claims 1 to 4, wherein the binder matrix further comprises one.or more texture modifying ingredients, and optionally, an emulsifying agent.

6.      A shelf-stable, multi-textured food product as claimed in claim 5, wherein the texture modifying ingredients include fats.

7.    A shelf-stable, multi-textured food product as claimed in any one of the preceding claims, wherein the amount of glycerol in the binder matrix is from about 5% to 40%, based on the total weight of the binder matrix.

8.    A shelf-stable, multi-textured food product as claimed in claim 7, wherein the amount of glycerol in the binder matrix is from about 15% to 25%, based on the total weight of the binder matrix.

9.    A shelf-stable, multi-textured food product as claimed in any one of the preceding claims, wherein the amount of gelatin in the binder matrix is from about 1% to 10%, based on the total weight of the matrix.

10.    A shelf-stable, multi-textured food product as claimed in claim 9, wherein the amount of gelatin in the binder matrix is from about 2% to 5%, based on the total weight of the matrix.

11.    A shelf-stable, multi-textured food product as claimed in any one of the preceding claims, wherein the binder matrix has a water activity of less than about 0.425.

12.    A shelf-stable, multi-textured food product, as claimed in claim 11, wherein the binder matrix has a water activity less than about 0.350.

13.    A shelf-stable, multi-textured food product, as claimed in any one of the preceding claims, containing from about 30% to 70% discrete food-component regions and from about 70% to 30% binder matrix, based on the weight of the product.

14.     A shelf-stable, multi-textured food product as claimed in claim 13, containing about 60% discrete food-component regions and about 40% binder matrix, based on the total weight of the product.

15.     A shelf-stable, multi-textured food product as claimed in any one of the preceding claims, wherein said food product comprises a bar of generally rectangular cross-section and the discrete food-component regions comprise a granola mixture.

16.     A method of producing a shelf-stable, multi-textured food product according to any one of the preceding claims which comprises heating glycerol, dissolving gelatin in the heated glycerol, admixing the solution with a plurality of insoluble food components, said food components having a variety of texture and flavor characteristics, and cooling the solution to form a gelatinous, low water activity binder.

0178074

European Patent
Office

**EUROPEAN SEARCH REPORT**

Application number

EP 85 30 6385

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 889 002 (A.S. CLAUSI et al.) <br> * claims 1-3, 8, 9 * | 1-3,7, 8 | A 23 L 1/04 <br> A 23 L 1/42 |
| A | WO-A-8 102 377 (KRAFT INC.) <br><br> * claims 1, 2 * | | |

|  |  |  | TECHNICAL FIELDS SEARCHED (Int. Cl.4) |
|---|---|---|---|
|  |  |  | A 23 L 1/00 |

The present search report has been drawn up for all claims

| Place of search | Date of completion of the search | Examiner |
|---|---|---|
| BERLIN | 05-12-1985 | SCHULTZE D |